# EUROPÄISCHE PATENTSCHRIFT

(11) **EP 3 114 375 B1**
(45) Veröffentlichungstag und Bekanntmachung des Hinweises auf die Patenterteilung: **25.04.2018**
(21) Anmeldenummer: 15716717.2
(22) Anmeldetag: 04.03.2015
(51) Int. Cl.: B23P 15/06, F16J 9/20

(54) **ÖLABSTREIFKOLBENRING UND VERFAHREN ZUR HERSTELLUNG EINES ÖLABSTREIFKOLBENRINGS**
OIL SCRAPER PISTON RING AND METHOD FOR PRODUCING AN OIL SCRAPER PISTON RING
SEGMENT DE PISTON RACLEUR D'HUILE ET PROCÉDÉ SERVANT À FABRIQUER UN SEGMENT DE PISTON RACLEUR D'HUILE

(30) Priorität: 04.03.2014 DE 102014003149
(43) Veröffentlichungstag der Anmeldung: 11.01.2017
(73) Patentinhaber: Federal-Mogul Burscheid GmbH, 51399 Burscheid (DE)
(72) Erfinder: BÄRENREUTER, Dirk, 51519 Odenthal (DE)
(74) Vertreter: Döpp, Ludger
(86) Internationale Anmeldenummer: PCT/DE2015/000100
(87) Internationale Veröffentlichungsnummer: WO 2015/131872

(56) Entgegenhaltungen:
- DE-A1- 2 619 485
- DE-A1- 3 144 335
- DE-A1- 19 720 627
- DE-A1-102005 051 223
- DE-A1-102012 004 757
- US-A- 4 522 412
- US-A1- 2006 006 604
- US-A1- 2012 261 886

## Beschreibung

Die Erfindung betrifft einen Ölabstreifkolbenring, beinhaltend einen Grundkörper, der einen mit Laufstegen versehenen Laufflächenbereich, eine innere Umfangsfläche, obere und untere Flanken sowie zwischen den Laufstegen sich bis zur inneren Umfangsfläche erstreckenden Ölablaufbohrungen/-schlitze aufweist.

Die US 3,435,502 offenbart einen gattungsgemäßen Ölabstreifkolbenring. Auf einem Dorn wird eine Vielzahl von Kolbenringrohlingen aufgespannt und mittels eines Profilschleifwerkzeugs bearbeitet. Die Außenkontur der paketierten Kolbenringe wird mit einer verschleißfesten Beschichtung versehen. Anschließend wird die Außenumfangsfläche des Kolbenringpakets zylindrisch bearbeitet. Abschließend wird mittels eines Profileinstechwerkzeuges die gewünschte Kontur in den einzelnen Kolbenringen eingebracht. Somit werden einzelne Laufstege gebildet, die mit dem verschleißfesten Material gefüllten Nuten beinhalten, während die übrigen Bereiche der Laufflächenstege zumindest partiell beschichtungsfrei sind.

Die DE 10 2010 048 079 B4 offenbart ein Verfahren zur Herstellung eines Kolbenrings mit einer axialen Höhe ≤ 2 mm, der eine mit mindestens einem Steg versehene radial äußere Lauffläche, eine radial innere Umfangsfläche sowie dazwischen verlaufende obere und untere Flankenflächen aufweist, indem der jeweilige Steg mit einer radial nach außen sich konisch verjüngenden Kontur versehen wird, danach die Lauffläche samt der Stegflanken des jeweiligen konischen Stegs mit mindestens einer verschleißfesten Schicht versehen und anschließend ausschließlich die eine Abstreifkante bildende, einem Kurbelgehäuse zugewandte flankenseitige Verschleißschicht der Stegflanke des jeweiligen Stegs einem zumindest partiellen Materialabtrag unterzogen wird, wobei die außerhalb der bearbeiteten jeweiligen Stegflanke verbleibenden Flächenanteile der Lauffläche, einschließlich des jeweiligen Stegs, keiner Bearbeitung unterzogen werden.

In der DE 10 2012 010 753 A1 wird ein Verfahren zur Herstellung eines Ölabstreifkolbenrings mit einer axialen Bauhöhe ≤ 2,0 mm beschrieben, der zwei beabstandete, radial äußere Laufflächenstege, eine innere Umfangsfläche sowie obere und untere Flankenbereiche beinhaltet, wobei zumindest auf den Laufflächenstegen ein verschleißfester Überzug angebracht ist, wobei ein aus Gussmaterial bestehender Grundkörper dergestalt mit einem Laufflächenprofil versehen wird, dass bei gegebenem axialen Abstand der Laufflächenstege eine Nut vorgebbarer Breite und Tiefe dergestalt erzeugt wird, dass einander gegenüberliegende Laufstegflanken im Wesentlichen parallel zu den oberen und unteren Flankenbereichen verlaufen, auf die Laufflächenstege ein verschleißfester Überzug auf Basis von Chrom oder einer Legierung daraus abgeschieden wird und durch Profilschleifen die Endkontur der Laufflächenstege erzeugt wird, wobei mechanisch lediglich die Kantenbereiche der Laufflächenstege bearbeitet und abschließend im Bereich des Nutgrunds Drainagebohrungen eingebracht werden.

Die DE 10 2005 051 223 B4 offenbart einen gattungsgemäßen Ölabstreifring mit zwei beabstandeten Laufstegen sowie einem im Bereich der inneren Umfangsfläche vorgesehenen Federelemet, wobei, in Umfangsrichtung gesehen, zwischen den Laufstegen eine Vielzahl von Öldurchtrittsöffnungen vorgesehen ist, deren Querschnitt sich vergrößert. Der Ölabstreifkolbenring weist eine Ringhöhe < 1,5 mm auf. Der Querschnitt der Öldurchtrittsöffnungen vergrößert sich radial von außen nach innen trompetenartig, wobei die Ein- oder die Austrittsbereiche der Öldurchtrittsöffnungen mit Kantenverrundungen versehen sind.

Durch Die DE 10 2012 004 757 A1 ist ein Ölabstreifring bekannt geworden, beinhaltend einen Grundkörper mit einer radial äußeren Lauffläche, einer radial inneren Umfangsfläche sowie einer oberen und einer unteren Flanke, der mindestens zwei, bedarfsweise mit einer verschließfesten Schicht versehene Laufflächenstege aufweist, die sich radial in Richtung ihres einer Gegenlauffläche zugewandten Endes vom Grundkörper ausgehend, unter einem vorgebbaren Flankenwinkel, Schenkel bildend, konisch verjüngen und das freie Ende der Laufflächenstege, ausgehend von einem ölraumseitigen Bereich in Richtung eines brennraumseitigen Bereichs, zumindest partiell abgeschrägt ausgebildet sind, wobei die jeweiligen Übergangsbereiche einerseits vom abgeschrägten Bereich des Laufflächenstegs in die Schenkel und andererseits von den Schenkeln in den Grundkörper gerundet ausgebildet sind.

Die DE 31 44 335 A1 offenbart ein Verfahren zur Herstellung von mit einer verschleißfesten Schicht zu versehenden rotationssymmetrischen Werkstücken, insbesondere von Kolbenringen, indem die Werkstücke paketiert und zentrisch auf einen Dorn gespannt werden, die äußere Umfangsfläche dann mit einer verschleißfesten Schicht überzogen und anschließend das Paket wieder in die einzelnen Werkstücke aufgetrennt wird. Vor der Beschichtung werden die paketierten Werkstücke in axialer Richtung abgetastet, die axiale Lage jeder Berührungsebene zwischen den einzelnen Werkstücken wird festgestellt und gespeichert, wobei diese Daten nach der Beschichtung der Werkstücke einem oder mehreren Bearbeitungswerkzeugen zur Auffindung der Berührungsebenen zur Verfügung gestellt werden. Die Werkstücke können hierbei im gleichen Arbeitsgang zusätzlich in radialer Richtung an der Außenkontur profiliert werden.

Der Erfindung liegt die Aufgabe zugrunde, einen Ölabstreifkolbenring vorzuschlagen, der eine geringe axiale Bauhöhe (vorzugsweise ≤ 2,5 mm) aufweist, dessen Laufflächenstege zumindest partiell mit einem Verschleißschutz versehen sind und der für die Dornfertigung geeignet ist.

Darüber hinaus soll ein Verfahren zur Herstellung eines derartigen Ölabstreifkolbenrings bereitgestellt werden, mit welchem auf einfache Weise Kolbenringrohlinge zumindest im Bereich ihrer Lauffläche abschließend bearbeitet werden können.

Dieser Aufgabe wird bei einem Ölabstreifkolbenring, beinhaltend einen Grundkörper, der einen mit Laufstegen versehenen Laufflächenbereich, eine innere Umfangsfläche, obere und untere Flanken sowie zwischen den Laufstegen sich bis zur inneren Umfangsfläche erstreckende Ölablaufbohrungen/-schlitze aufweist gelöst durch folgende Merkmale:
a) der Grundkörper hat eine Bauhöhe zwischen 1,2 und ≤ 2,5 mm,
b) die Breite des jeweiligen Laufstegs liegt im Bereich der äußeren Umfangsfläche zwischen 0,10 und 0,35 mm,
c) im Bereich der Laufstege sind umlaufende Nuten vorgesehen, die mit einer verschleißfesten Beschichtung versehen sind,
d) die Nut erstreckt sich partiell im Bereich des jeweiligen Laufstegs dergestalt, dass im Bereich der oberen sowie der unteren Flanke ein beschichtungsfreier Abschnitt mit einer Breite zwischen 0,04 und 0,25 mm gegeben ist,
e) der beschichtungsfreie Abschnitt des jeweiligen Laufstegs ist im Einlaufbereich in die jeweilige Flanke rechtwinklig ausgebildet und weist eine scharfe Kante auf,
f) die Tiefe der im Bereich der Laufstege vorgesehenen Nuten beträgt zwischen 0,005 und 0,10 mm,
g) die Höhe (e) des jeweiligen Laufstegs beträgt zwischen 0,15 und 0,70 mm.

Eine bevorzugte Ausgestaltung des erfindungsgemäßen Ölabstreifkolbenrings beinhaltet folgende Parameter:
a) der Grundkörper hat eine Bauhöhe zwischen 1,2 und ≤ 2,0 mm,
b) die Breite des jeweiligen Laufstegs liegt im Bereich der äußeren Umfangsfläche zwischen 0,10 und 0,25 mm,
c) im Bereich der Laufstege sind umlaufende Nuten vorgesehen, die mit einer verschleißfesten Beschichtung versehen sind,
d) die Nut erstreckt sich partiell im Bereich des jeweiligen Laufstegs dergestalt, dass im Bereich der oberen sowie der unteren Flanke ein beschichtungsfreier Abschnitt mit einer Breite zwischen 0,04 und 0,15 mm gegeben ist,
e) der beschichtungsfreie Abschnitt des jeweiligen Laufstegs ist im Einlaufbereich in die jeweilige Flanke rechtwinklig ausgebildet und weist eine scharfe Kante auf,
f) die Tiefe der im Bereich der Laufstege vorgesehenen Nuten beträgt zwischen 0,005 und 0,06 mm,
g) die Höhe (e) des jeweiligen Laufstegs liegt zwischen 0,15 und 0,50 mm.

Vorteilhafte Weiterbildungen des Erfindungsgegenstandes sind den zugehörigen gegenständlichen Unteransprüchen zu entnehmen.

Die Aufgabe wird auch gelöst durch ein Verfahren zur Herstellung eines Ölabstreifkolbenrings, indem
- eine Vielzahl von Kolbenringrohlingen auf einem Runddorn aufgespannt werden,
- die exakte Position der Trennfugen zwischen einzelnen Kolbenringrohlingen über die gesamte Dornlänge gemessen wird,
- die Außenumfangsfläche der Kolbenringrohlinge derart profiliert wird, dass im Übergangsbereich benachbarter Kolbenringrohlinge eine Überhöhung entsteht,
- wobei außerhalb der Überhöhung eine zylindrische Bearbeitung der Außenumfangsfläche vorgenommen wird,
- zumindest die Außenumfangsfläche der paketierten Kolbenringrohlinge mit einer verschleißfesten Beschichtung versehen wird,
- wobei die Überhöhung zumindest partiell durch die Beschichtung zumindest partiell nachgebildet wird,
- die Außenumfangsfläche der beschichteten Kolbenringrohlinge einer zylindrischen Bearbeitung unterzogen wird,
- wobei die verschleißfeste Schicht so weit abgetragen wird, dass im Übergangsbereich zwischen einzelnen Kolbenringrohlingen keine verschleißfeste Schicht mehr vorhanden ist,
- die gewünschte Außenkontur der Kolbenringrohlinge zur Bildung eines Ölrückhaltevolumens erzeugt wird,
- die Kolbenringrohlinge anschließend vereinzelt und ihrer Weiterbearbeitung zugeführt werden.

Vorteilhafte Weiterbildungen des erfindungsgemäßen Verfahrens sind den zugehörigen verfahrensgemäßen Unteransprüchen zu entnehmen.

Der Grundkörper des erfindungsgemäßen Ölabstreifkolbenrings besteht vorzugsweise aus Graugussmaterial. Alternativ sind aber auch Stahldraht oder Stahlguss denkbar, um den Grundkörper zu erzeugen. Der Ring ist absolut symmetrisch. Die Ringstege sind einerseits scharfkantig zur jeweiligen Flanke hin als auch andererseits scharfkantig in Richtung des Ölrückhaltevolumens ausgebildet. Das Vorprofil und auch das Fertigprofil im Laufflächenbereich des erfindungsgemäßen Kolbenrings werden auf identischen Runddornen gefertigt. Dies erlaubt bedarfsweise Steghöhen von z.B. lediglich 0,15 mm.

Nachdem die Außenkontur fertig bearbeitet wurde, wird der Dorn geöffnet. Im Anschluss daran werden Drainagebohrungen/-schlitze im jeweiligen Laufflächenbereich des Grundkörpers eingebracht und anschließend die Innenkontur zur Aufnahme eines, insbesondere als Schlauchfederring ausgebildeten, Federelements eingebracht.

Die verschleißfeste Beschichtung kann vorteilhafterweise auf Basis von Chrom oder einer Legierung daraus erzeugt werden. Alternative Beschichtungen auf Basis von PVD, DLC oder als Spritzschicht sind natürlich ebenfalls denkbar.

Auf die Rohlinge wird vorteilhafterweise eine, eine Schichtdicke < 0,10 mm aufweisende, verschleißfeste Schicht aufgebracht, die im Verlauf der zylindrischen Bearbeitung auf eine Schichtdicke ≤ 0,05 mm abgetragen wird.

Der Erfindungsgegenstand ist anhand eines Ausführungsbeispiels in der Zeichnung dargestellt und wird wie folgt beschrieben.
- Figur 1: Prinzipskizze eines erfindungsgemäßen Ölabstreifkolbenrings,
- Figuren 2a bis 2e: Prinzipskizzen eines Verfahrensweges zur Erzeugung eines erfindungsgemäßen Ölabstreifkolbenrings gemäß Figur 1.

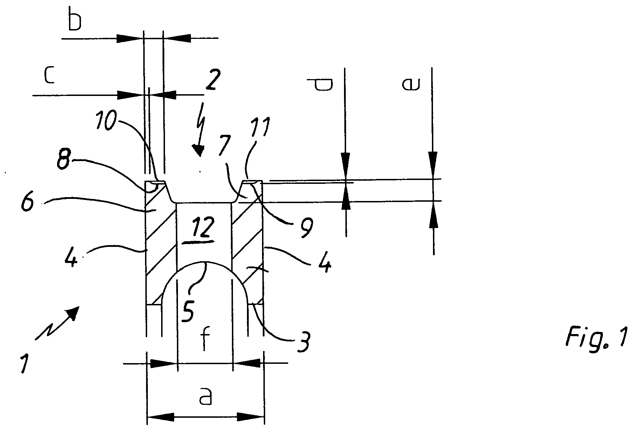

Figur 1 zeigt einen erfindungsgemäßen Ölabstreifkolbenring, dem beispielhaft innerhalb der im Anspruch 1 genannten Parameter nun konkrete Werte zugeordnet werden.

Der erfindungsgemäße Ölabstreifkolbenring beinhaltet in diesem Beispiel einen Grundkörper 1 aus Grauguss. Der Grundkörper 1 weist einen Laufflächenbereich 2, eine innere Umfangsfläche 3, obere und untere Flanken 4 sowie eine im Bereich der inneren Umfangsfläche 3 vorgesehene Nut 5 auf. Die Nut 5 ist zur Aufnahme eines nicht dargestellten, insbesondere als Schlauchfeder ausgebildeten, Federelements vorgesehen.

Der Laufflächenbereich 2 beinhaltet in diesem Beispiel zwei Laufstege 6,7. Das Beispiel zeigt den fertig bearbeiteten Grundkörper 1, der in diesem Beispiel im Bereich der Laufstege 6,7 eine Nut 8,9 aufweist, die mit einem verschleißfesten Material, beispielsweise Chrom 10,11, gefüllt ist. Die im ersten Anspruch 1 angegebenen Bereiche der einzelnen Parameter werden wie folgt wiedergegeben:

| | | |
|---|---|---|
| Bauhöhe | (a) | 1,5 mm |
| Laufstegbreite | (b) | 0,15 mm |
| beschichtungsfreier Abschnitt | (c) | 0,08 mm |
| Nuttiefe | (d) | 0,01 mm |
| Laufsteghöhe | (e) | 0,25 mm. |

Zwischen dem Laufflächenbereich 2 und der inneren Umfangsfläche 2 erstrecken sich in diesem Beispiel als Bohrungen ausgebildete Drainagelöcher 12.

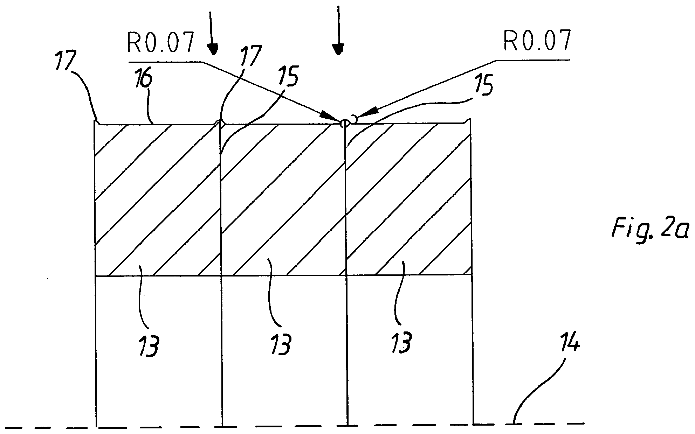

Die Figuren 2a bis 2e zeigen die erfindungsgemäßen Bearbeitungsschritte.

In Figur 2a sind mehrere paketierte Kolbenringrohlinge 13 dargestellt, die auf einem nur angedeuteten Runddorn 14 aufgespannt sind. In einem ersten Schritt wird die exakte Position der Trennfuge 15 zwischen benachbarten Kolbenringrohlingen 13 ermittelt (↓). Anschließend wird die Außenumfangsfläche 16 der paketierten Kolbenringrohlinge dergestalt bearbeitet, dass im Bereich der Trennfuge 15 radial vorstehende Überhöhungen 17 gebildet werden. Der verbleibende Umfangsbereich der Außenumfangsfläche 16 wird zylindrisch bearbeitet.

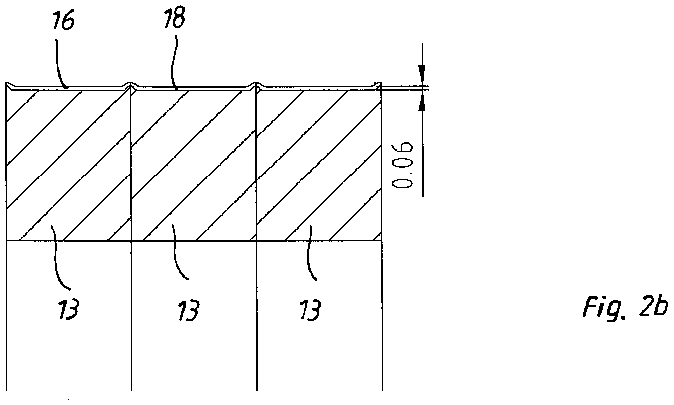

Figur 2b zeigt, dass die äußere Umfangsfläche 16 der paketierten Kolbenringrohlinge 13 mit einer verschleißfesten Beschichtung 18, beispielsweise einer Chromschicht, versehen wurde. Alternativ sind auch PVD-, CVD-, DLC- oder Spritzschichten denkbar. Die Überhöhungen 17 werden hierbei von der Beschichtung 18 nachgebildet. Die Schichtstärke der Beschichtung 18 soll in diesem Beispiel 0,10 mm betragen.

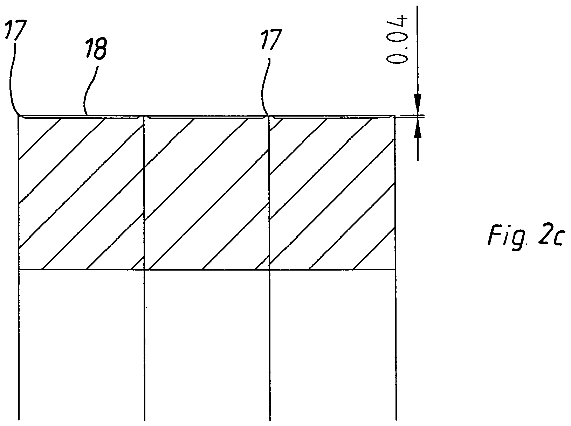

Figur 2c ist zu entnehmen, dass durch zylindrische Bearbeitung die Beschichtung 18 samt Überhöhung 17 abgeschliffen wurde, wobei eine Schichtdicke der Beschichtung von etwa 0,05 mm verbleibt. Die Überhöhung 17 ist hierbei beschichtungsfrei, d.h. wurde bis auf das Grundmaterial abgetragen.

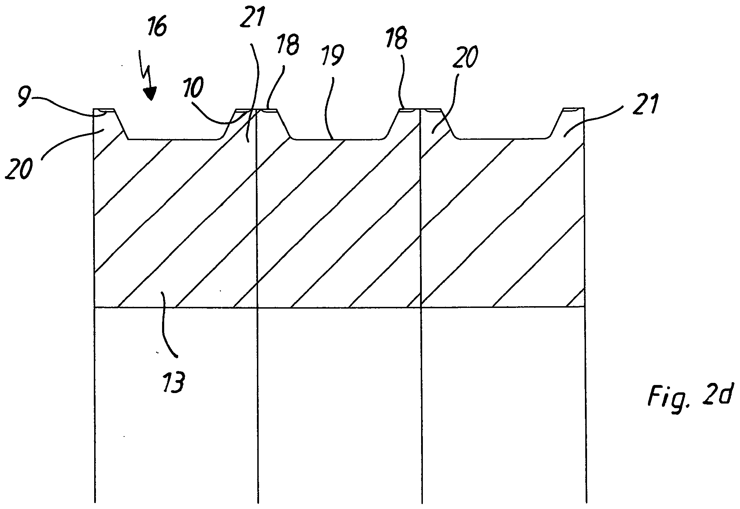

Der in Figur 2d dargestellte Bearbeitungsschritt zeigt, dass durch ein nicht weiter dargestelltes Bearbeitungswerkzeug in die beschichtete äußere Umfangsfläche 16 der paketierten Kolbenringrohlinge 13 ein Profil 19 eingebracht wurde, dergestalt, dass zwei Laufstege 20,21 gebildet werden. Die Laufstege 20, 21 beinhalten nun lediglich noch die in Figur 1 dargestellten mit der Beschichtung 18 versehenen Nuten 9,10.

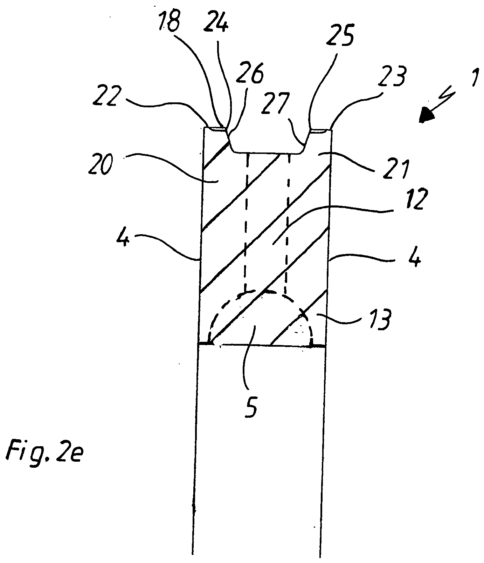

Figur 2e zeigt den im Bereich der äußeren Umfangsfläche 16 fertig bearbeiteten Grundkörper 1. Selbiger weist im Übergangsbereich vom jeweiligen Laufsteg 20, 21 in die zugehörige Flanke 4 eine beschichtungsfreie scharfe Kante 22,23 auf. Gleichfalls wird eine scharfe Kante 24,25 im Übergangsbereich der verbliebenen Beschichtung 18 in den geneigt verlaufenden Flankenabschnitt 26,27 gebildet.

Im Anschluss an die Vereinzelung der Kolbenringrohlinge 13 werden in Folgearbeitsschritten noch die in Figur 1 dargestellten Ölablaufbohrungen/-schlitze 12 und die Nut 5 zur Aufnahme eines Federelements eingearbeitet.

## Patentansprüche

1. Ölabstreifkolbenring, beinhaltend einen Grundkörper (1), der einen mit Laufstegen (20,21) versehenen Laufflächenbereich (2), eine innere Umfangsfläche (3), obere und untere Flanken (4) sowie zwischen den Laufstegen (20,21) sich bis zur inneren Umfangsfläche (3) erstreckende Ölablaufbohrungen/-schlitze (12) aufweist, **gekennzeichnet durch** folgende Merkmale:
a) der Grundkörper (1) hat eine Bauhöhe (a) zwischen 1,2 und ≤ 2,5 mm,
b) die Breite (b) des jeweiligen Laufstegs (20,21) liegt im Bereich der äußeren Umfangsfläche zwischen 0,10 und 0,35 mm,
c) im Bereich der Laufstege (20,21) sind umlaufende Nuten (8,9) vorgesehen, die mit einer verschleißfesten Beschichtung (10,11,18) versehen sind,
d) die jeweilige Nut (8,9) erstreckt sich partiell im Bereich des jeweiligen Laufstegs (20,21) dergestalt, dass im Bereich der oberen sowie der unteren Flanke (4) ein beschichtungsfreier Abschnitt mit einer Breite (c) zwischen 0,04 und 0,25 mm gegeben ist,
e) der beschichtungsfreie Abschnitt des jeweiligen Laufstegs (20,21) ist im Einlaufbereich in die jeweilige Flanke (4) rechtwinklig ausgebildet und weist eine scharfe Kante (22,23) auf,
f) die Tiefe (d) der im Bereich der Laufstege (20,21) vorgesehenen Nuten (8,9) beträgt zwischen 0,005 und 0,10 mm,
g) die Höhe (e) des jeweiligen Laufstegs (20,21) beträgt zwischen 0,15 und 0,70 mm.

2. Ölabstreifkolbenring nach Anspruch 1, **gekennzeichnet durch** folgende Merkmale:
a) der Grundkörper (1) hat eine Bauhöhe (a) zwischen 1,2 und ≤ 2,0 mm,
b) die Breite (b) des jeweiligen Laufstegs (20,21) liegt im Bereich der äußeren Umfangsfläche zwischen 0,10 und 0,25 mm,
c) im Bereich der Laufstege (20,21) sind umlaufende Nuten (8,9) vorgesehen, die mit einer verschleißfesten Beschichtung (10,11,18) versehen sind,
d) die jeweilige Nut (8,9) erstreckt sich partiell im Bereich des jeweiligen Laufstegs (20,21) dergestalt, dass im Bereich der oberen sowie der unteren Flanke (4) ein beschichtungsfreier Abschnitt mit einer Breite (c) zwischen 0,04 und 0,15 mm gegeben ist,
e) der beschichtungsfreie Abschnitt des jeweiligen Laufstegs (20,21) ist im Einlaufbereich in die jeweilige Flanke (4) rechtwinklig ausgebildet und weist eine scharfe Kante (22,23) auf,
f) die Tiefe (d) der im Bereich der Laufstege (20,21) vorgesehenen Nuten (8,9) beträgt zwischen 0,005 und 0,06 mm,
g) die Höhe (e) des jeweiligen Laufstegs (20,21) liegt zwischen 0,15 und 0,50 mm.

3. Ölabstreifkolbenring nach Anspruch 1 oder 2, **dadurch gekennzeichnet, dass** der Grundkörper (1) aus Gusseisen oder Stahl besteht.

4. Ölabstreifkolbenring nach einem der Ansprüche 1 bis 3, **dadurch gekennzeichnet, dass** die verschleißfeste Beschichtung (10,11,18) auf Basis von Chrom erzeugt ist.

5. Ölabstreifkolbenring nach einem der Ansprüche 1 bis 3, **dadurch gekennzeichnet, dass** die verschleißfeste Beschichtung (10,11,18) eine PVD-, DLC- oder eine Spritzschicht ist.

6. Ölabstreifkolbenring nach einem der Ansprüche 1 bis 5, **dadurch gekennzeichnet, dass** die zwischen den Laufstegen (20,21) vorgesehenen Ölablaufbohrungen/-schlitze (12) einen Durchmesser/eine Breite zwischen 0,4 und 1,0 mm aufweisen.

7. Ölabstreifkolbenring nach einem der Ansprüche 1 bis 6, **dadurch gekennzeichnet, dass** der Übergangsbereich der verschleißfesten Beschichtung (18) in den ölablaufbohrungsseitig vorgesehenen Flankenabschnitt (26,27) scharfkantig ausgebildet ist.

8. Verfahren zur Herstellung eines Ölabstreifkolbenrings, indem
- eine Vielzahl von Kolbenringrohlingen (13) auf einem Runddorn (14) aufgespannt wird,
- die exakte Position der Trennfugen (15) zwischen einzelnen Kolbenringrohlingen (13) über die gesamte Dornlänge gemessen wird,
- die Außenumfangsfläche (16) der Kolbenringrohlinge (13) derart profiliert wird, dass im Übergangsbereich benachbarter Kolbenringrohlinge (13) eine Überhöhung (17) entsteht,
- wobei außerhalb der Überhöhung (17) eine zylindrische Bearbeitung der Außenumfangsfläche (16) vorgenommen wird,
- zumindest die Außenumfangsfläche (16) der paketierten Kolbenringrohlinge (13) mit einer verschleißfesten Beschichtung (18) versehen wird,
- wobei die Überhöhung (17) durch die Beschichtung (18) zumindest partiell nachgebildet wird,
- die Außenumfangsfläche (16) der beschichteten Kolbenringrohlinge (13) einer zylindrischen Bearbeitung unterzogen wird,
- wobei die verschleißfeste Schicht (18) so weit abgetragen wird, dass im Übergangsbereich zwischen einzelnen Kolbenringrohlingen (13) keine verschleißfeste Schicht (18) mehr vorhanden ist,
- die gewünschte Außenkontur der Kolbenringrohlinge (13) zur Bildung eines Olrückhaltevolumens erzeugt wird,
- die Kolbenringrohlinge (13) anschließend vereinzelt und ihrer Weiterbearbeitung zugeführt werden.

9. Verfahren nach Anspruch 8, **dadurch gekennzeichnet, dass** die verschleißfeste Beschichtung (18) auf Basis von Chrom erzeugt wird.

10. Verfahren nach Anspruch 8 oder 9, **dadurch gekennzeichnet, dass** im Verlauf der Beschichtung eine Schichtdicke < 0,10 mm erzeugt wird, die im Verlauf der zylindrischen Bearbeitung auf eine Dicke ≤ 0,05 mm abgetragen wird.

11. Verfahren nach einem der Ansprüche 8 bis 10, **dadurch gekennzeichnet, dass** sämtliche Bearbeitungsschritte auf dem gleichen Runddorn (14) durchgeführt werden.

## Claims

1. An oil scraper piston ring, comprising a base body (1) which comprises a bearing surface area (2) provided with bearing webs (20, 21), an inner circumferential surface (3), upper and lower flanks (4) as well as oil outlet holes/slits (12) which extend between the bearing webs (20, 21) up to the inner circumferential surface (3), **characterized by** the following characteristics:
a) the base body (1) comprises a construction height (a) comprised between 1.2 and ≤ 2,5 mm,
b) the width (b) of the respective bearing web (20, 21) is comprised between 0.10 and 0.35 mm in the area of the outer circumferential surface,
c) circumferential grooves (8, 9) are provided in the area of the bearing webs (20, 21), which grooves (8, 9) are provided with a wear-resistant coating (10, 11, 18),
d) the respective groove (8, 9) partially extends in the area of the respective bearing web (20, 21), such that a coating-free section having a width (c) comprised between 0.04 and 0.25 mm remains in the area of the upper as well as the lower flank (4),
e) the coating-free section of the respective bearing web (20, 21) is designed in a right-angled manner in the area where it merges into the respective flank (4) and comprises a sharp edge (22, 23),
f) the depth (d) of the grooves (8, 9) provided in the area of the bearing webs (20, 21) is comprised between 0.005 and 0.10 mm,
g) the height (e) of the respective bearing web (20, 21) is comprised between 0.15 and 0.70 mm.

2. An oil scraper piston ring according to claim 1, **characterized by** the following characteristics:
a) the base body (1) comprises a construction height (a) comprised between 1.2 and ≤ 2,0 mm,
b) the width (b) of the respective bearing web (20, 21) is comprised between 0.10 and 0.25 mm in the area of the outer circumferential surface,
c) circumferential grooves (8, 9) are provided in the area of the bearing webs (20, 21), which grooves (8, 9) are provided with a wear-resistant coating (10, 11, 18),
d) the respective groove (8, 9) partially extends in the area of the respective bearing web (20, 21), such that a coating-free section having a width (c) comprised between 0.04 and 0.15 mm remains in the area of the upper as well as the lower flank (4),
e) the coating-free section of the respective bearing web (20, 21) is designed in a right-angled manner in the area where it merges into the respective flank (4) and comprises a sharp edge (22, 23),
f) the depth (d) of the grooves (8, 9) provided in the area of the bearing webs (20, 21) is comprised between 0.005 and 0.06 mm,
g) the height (e) of the respective bearing web (20, 21) is comprised between 0.15 and 0.50 mm.

3. An oil scraper piston ring according to claim 1 or 2, **characterized in that** the base body (1) is made of cast iron or steel.

4. An oil scraper piston ring according to one of the claims 1 through 3, **characterized in that** the wear-resistant coating (10, 11, 18) is made on the base of chromium.

5. An oil scraper piston ring according to one of the claims 1 through 3, **characterized in that** the wear-resistant coating (10, 11, 18) is a PVD, a DLC or a spray coating.

6. An oil scraper piston ring according to one of the claims 1 through 5, **characterized in that** the oil outlet holes/slits (12) provided between the bearing webs (20, 21) comprise a diameter/a width comprised between 0.4 and 1.0 mm.

7. An oil scraper piston ring according to one of the claims 1 through 6, **characterized in that** the transition area where the wear-resistant coating (18) merges into the flank section (26, 27) provided on the side of the oil outlet hole is formed with a sharp edge.

8. A method of manufacturing an oil scraper piston ring, in which
- a plurality of piston ring blanks will be stretched over a round arbour (14),
- the precise position of the parting lines (15) between individual piston ring blanks (13) will be measured over the entire arbour length,
- the outer circumferential surface (16) of the piston ring blanks (13) will be profiled such that a camber (17) is formed in the transition area of adjacent piston ring blanks (13),
- wherein outside the camber (17) a cylindrical processing of the outer circumferential surface (16) will be carried out,
- at least the outer circumferential surface (16) of the packetized piston ring blanks (13) will be provided with a wear-resistant coating (18),
- wherein the camber (17) will be at least partially replicated by the coating (18),
- the outer circumferential surface (16) of the coated piston ring blanks (13) will undergo a cylindrical processing,
- wherein the wear-resistant layer (18) will be removed until there is no more wear-resistant layer (18) in the transition area between individual piston ring blanks (13),
- the desired outer contour of the piston ring blanks (13) will be produced for forming an oil containment volume,
- the piston ring blanks (13) will be afterwards separated and supplied to the further processing thereof.

9. A method according to claim 8, **characterized in that** the wear-resistant coating (18) is made on the base of chromium.

10. A method according to claim 8 or 9, **characterized in that** in the course of forming the coating a layer thickness of < 0.10 mm will be generated which will be removed during the cylindrical processing until reaching a thickness of ≤ 0.05 mm.

11. A method according to one of the claims 8 through 10, **characterized in that** all the processing steps will be carried out on the same round arbour (14).

## Revendications

1. Segment de piston racleur d'huile, comprenant un corps de base (1), qui comprend une partie de surface de glissement (2) munie d'entretoises de glissement (20, 21), une surface circonférentielle intérieure (3), des flancs supérieur et inférieur (4) ainsi que des orifices/fentes d'évacuation d'huile (12), qui s'étendent entre les entretoises de glissement (20, 21) jusqu'à la surface circonférentielle intérieure (3), **caractérisé par** les caractéristiques suivantes :
a) le corps de base (1) comprend une hauteur de construction (a) comprise entre 1,2 et < 2,5 mm,
b) la largeur (b) de l'entretoise de glissement respective (20, 21) est comprise entre 0,10 et 0,35 mm dans la zone de la surface circonférentielle extérieure
c) des rainures circonférentielles (8, 9) sont prévues dans la zone des entretoises de glissement (20, 21), lesquelles rainures (8, 9) sont munies d'un revêtement résistant à l'usure (10, 11, 18),
d) la rainure respective (8, 9) s'étend partiellement dans la zone de l'entretoise de glissement respective (20, 21), de sorte qu'une partie sans revêtement ayant une largeur (c) comprise entre 0,04 et 0,25 mm se trouve dans la zone du flanc supérieur et du flanc inférieur (4),
e) la partie sans revêtement de l'entretoise de glissement respective (20, 21) est configurée de manière orthogonale dans la partie où elle entre dans le flanc respectif (4) et elle comprend une arête vive (22, 23),
f) la profondeur (d) des rainures (8, 9) prévues au niveau des entretoises de glissement (20, 21) est comprise entre 0,005 et 0,10 mm,
g) la hauteur (e) de l'entretoise de glissement respective (20, 21) est comprise entre 0,15 et 0,70 mm.

2. Segment de piston racleur d'huile selon la revendication 1, **caractérisé par** les caractéristiques suivantes :
a) le corps de base (1) comprend une hauteur de construction (a) comprise entre 1,2 et ≤ 2,0 mm,
b) la largeur (b) de l'entretoise de glissement respective (20, 21) est comprise entre 0,10 et 0,25 mm dans la zone de la surface circonférentielle extérieure
c) des rainures circonférentielles (8, 9) sont prévues dans la zone des entretoises de glissement (20, 21), lesquelles rainures (8, 9) sont munies d'un revêtement résistant à l'usure (10, 11, 18),
d) la rainure respective (8, 9) s'étend partiellement dans la zone de l'entretoise de glissement respective (20, 21), de sorte qu'une partie sans revêtement ayant une largeur (c) comprise entre 0,04 et 0,15 mm se trouve dans la zone du flanc supérieur et du flanc inférieur (4),
e) la partie sans revêtement de l'entretoise de glissement respective (20, 21) est configurée de manière orthogonale dans la partie où elle entre dans le flanc respectif (4) et elle comprend une arête vive (22, 23),
f) la profondeur (d) des rainures (8, 9) prévues au niveau des entretoises de glissement (20, 21) est comprise entre 0,005 et 0,06 mm,
g) la hauteur (e) de l'entretoise de glissement respective (20, 21) est comprise entre 0,15 et 0,50 mm.

3. Segment de piston racleur d'huile selon la revendication 1 ou la revendication 2, **caractérisé en ce que** le corps de base (1) est fabriqué en fonte ou en acier.

4. Segment de piston racleur d'huile selon l'une des revendications 1 à 3, **caractérisé en ce que** le revêtement résistant à l'usure (10, 11, 18) est produit sur la base de chrome.

5. Segment de piston racleur d'huile selon l'une des revendications 1 à 3, **caractérisé en ce que** le revêtement résistant à l'usure (10, 11, 18) est une couche PVD, une couche DLC ou un revêtement par pulvérisation.

6. Segment de piston racleur d'huile selon l'une des revendications 1 à 5, **caractérisé en ce que** les orifices/fentes d'évacuation d'huile (12) prévus entre les entretoises de glissement (20, 21) comprennent un diamètre/une largeur compris entre 0,4 et 1,0 mm.

7. Segment de piston racleur d'huile selon l'une des revendications 1 à 6, **caractérisé en ce que** la zone de transition où le revêtement résistant à l'usure (18) passe dans la partie de flanc (26, 27) prévue sur le côté d'orifice d'évacuation d'huile est formée avec une arête vive.

8. Procédé de fabrication d'un segment de piston racleur d'huile, dans lequel
- une pluralité de brutes de segment de piston (13) est bridée sur un mandrin rond (14),
- la position précise des lignes de séparation (15) entre des brutes de segment de piston individuelles est mesurée sur toute la longueur de mandrin,
- la surface circonférentielle extérieure (16) des brutes de segment de piston (13) est profilée, de sorte qu'une voûte (17) est créée dans la zone de transition entre des brutes de segment de piston (13) adjacentes,
- un traitement cylindrique de la surface circonférentielle extérieure (16) étant effectué à l'extérieur de la voûte (17),
- au moins la surface circonférentielle extérieure (16) des brutes de segment de piston (13) rassemblées en paquets est munie d'un revêtement résistant à l'usure (18),
- la voûte (17) étant au moins partiellement reproduite par le revêtement (18),
- la surface circonférentielle extérieure (16) des brutes de segment de piston (13) revêtues est soumise à un traitement cylindrique,
- la couche résistante à l'usure (18) étant enlevée jusqu'à ce qu'il n'y ait plus de couche résistante à l'usure (18) dans la zone de transition entre des brutes de segment de piston (13) individuelles,
- le contour extérieur désiré des brutes de segment de piston (13) est produit pour former un volume de rétention d'huile,
- ensuite les brutes de segment de piston (13) sont séparées et amenées à leur traitement suivant.

9. Procédé selon la revendication 8, **caractérisé en ce que** le revêtement résistant à l'usure (18) est produit sur la base de chrome.

10. Procédé selon la revendication 8 ou 9, **caractérisé en ce que** pendant la formation du revêtement une épaisseur de couche de < 0,10 mm est générée, qui est réduite à une épaisseur de ≤ 0,05 mm au cours du traitement cylindrique.

11. Procédé selon l'une des revendications 8 à 10, **caractérisé en ce que** toutes les étapes de traitement sont effectuées sur le même mandrin rond (14).
